(19) Europäisches Patentamt
European Patent Office
Office européen des brevets

(11) Publication number: 0 034 935
A1

# (12) EUROPEAN PATENT APPLICATION

(21) Application number: 81300733.3

(22) Date of filing: 20.02.81

(51) Int. Cl.³: C 08 F 10/00
C 08 F 4/64

(30) Priority: 21.02.80 JP 21252/80

(43) Date of publication of application:
02.09.81 Bulletin 81/35

(84) Designated Contracting States:
BE DE FR IT NL

(71) Applicant: SUMITOMO CHEMICAL COMPANY, LIMITED
15 Kitahama 5-chome Higashi-ku
Osaka-shi Osaka-fu(JP)

(72) Inventor: Shiga, Akinobu
No. 13-12, Maeda-cho
Niihama-shi Ehime(JP)

(72) Inventor: Fukui, Yoshiharu
No. 6-18, Maeda-cho
Niihama-shi Ehime(JP)

(72) Inventor: Sasaki, Toshio
No. 2-6-517, Ikku-cho
Niihama-shi Ehime(JP)

(72) Inventor: Hideaki, Matsuura
No. 18-12, Isoura-cho
Niihama-shi Ehime(JP)

(72) Inventor: Yoshioka, Hiroshi
No. 18-12, Isoura-cho
Niihama-shi Ehime(JP)

(74) Representative: Diamond, Bryan Clive et al,
Gee & Co. Chancery House Chancery Lane
London WC2A 1QU(GB)

## (54) Titanium trichloride catalyst and process for production of alpha-olefin polymers.

(57) A component of a catalyst (for polymerizing olefins) is prepared by reacting a mixture of (1) a titanium trichloride hydrocarbon aluminum halide dialkyl ether composition, (2) a halogen, interhalogen compound or halgenated hydrocarbon and (3) a dialkyl ether, as in known from U.K. Patent No. 1,559,447; to increase activity of the catalyst and stereoregularity of the polymer, the mixture also includes (4) an electron donor, namely an organic compound containing a N, O, Si, S and /or P atom, e.g. an amine, imine, nitrile, ether, ketone, ester, sulfide, silane, siloxane, phosphine, phosphite or phosphate, in an amount of $10^{-6}$ to 0.02 mols per gram of titanium trichloride composition (1).

The reaction may be in an inert hydrocarbon solvent at 0° to 150°C for 5 minutes to 6 hours, after which the solid is isolated and washed.

The catalyst also includes a known hydrocarbon aluminum halide or hydride as activator and may include a further stereoregularity improving agent.

Olefins having 2 to 10 carbon atoms are homo- or copolymerized at 0° to 100°C to form stereoregular polyolefin using the catalyst in a small amount, e.g. 50 mg per 1.4 Kg of propylene.

EP 0 034 935 A1

# Titanium trichloride catalyst and process for production of α-olefin polymers

This invention relates to a catalyst containing titanium trichloride and to a process for the production of highly crystalline olefin polymers using this catalyst.

As is well known in the art, crystalline olefin polymers are produced by polymerizing olefins in the presence of a so-called Ziegler-Natta catalyst comprising a compound of a transition metal of Groups IV to VI of the periodic table and a metal of Groups I to III of the periodic table or an organo-compound of a metal of Groups I to III of the periodic table.

In industrially producing polymers of such olefins as propylene or butene-1, a titanium trichloride composition is usually employed. In this method of production, however, amorphous polymers are formed as by-products in addition to olefin polymers of high stereoregularity which are industrially very valuable.

These amorphous polymers are of low industrial value, and adversely affect the mechanical properties of products formed from the olefin polymers, such as films and fibres. Moreover, the formation of such amorphous polymers leads to the loss of the monomeric starting material, and an additional

means is required to remove the amorphous polymers. This is a very serious industrial disadvantage, and a method of substantial inhibition of the formation of amorphous polymers would be of great industrial advantage.

Furthermore, in this method of production, the catalyst remains as a residue in the resulting olefin polymers, and adversely affects the stability and processability of the polymers. Additional equipment is necessary therefore to remove the residual catalyst and to stabilize the polymers.

These disadvantages can be overcome by increasing the activity of the catalyst, which is expressed as the yield of olefin polymer per unit weight of catalyst. If the catalytic activity is increased, no equipment for the removal of the residual catalyst is necessary and the manufacturing cost of the olefin polymer can be reduced.

Titanium trichloride is obtained, for example, by (1) reducing titanium tetrachloride with hydrogen and activating the reduction product by ball-milling, (2) reducing titanium tetrachloride with metallic aluminum and activating the reduction product by ball-milling, or (3) reducing titanium tetrachloride with an organoaluminum compound at $-30^{o}C$ to $30^{o}C$ and heating the resulting solid reduction product to $120^{o}C$ to $180^{o}C$.

The titanium trichloride as obtained by the above described methods, however, is not sufficiently satisfactory in its catalytic activity and stereoregularity. Thus various improvements have been attempted.

As an improved method for production of titanium trichloride according to method (2) as described above, Japanese Patent Applications (OPI) Nos. 81889/1976, 117787/1976 and 87997/1978 propose to treat $TiCl_3AA$ with iodine or bromine, or a hydrocarbon compound of iodine or bromine. (The term

"OPI" as used herein refers to a "published unexamined Japanese patent application".)

Furthermore, various methods to activate the reduction solid obtained by reduction of titanium tetrachloride with the organoaluminum compound in method (3) have been proposed, including a method in which the reduction solid is treated with a complexing agent and further reacted with titanium tetrachloride (British Patents Nos. 1,391,067 and 1,391,068), a method in which the reduction solid is treated with a mixture of a complexing agent and titanium tetrachloride or carbon tetrachloride (Japanese Patent Applications (OPI) Nos. 34478/1972, 143790/1975, 30593/1976, 7891/1977 and 110793/1977), a method in which the reduction solid is treated with a complexing agent and a chlorinated hydrocarbon compound (Japanese Patent Applications (OPI) Nos. 107294/1977 and 14192/1978), a method in which α- or γ-type titanium trichloride is pulverized and treated with a complexing agent and further with an interhalogen compound (Japanese Patent Application (OPI) No. 155199/1977), and a method in which the reduction solid is treated with a complexing agent, titanium tetrachloride and a chlorinated hydrocarbon compound (Japanese Patent Application (OPI) No. 65286/1978).

The inventors also have already proposed a method of reacting a titanium trichloride composition with a mixture of an ether compound and a halogen or a halogen-containing compound (see U.S. Patent No. 4,165,298 and U.K. Patent No. 1,599,447).
These methods, however, fail to adequately improve the activity of the catalyst and stereoregularity of the polymer.

Extensive studies have been made on the production of a solid titanium tetrachloride catalyst which has greatly improved catalytic activity and permits to produce

crystalline olefin polymers having improved stereoregularity as compared to those disclosed in the prior art references cited hereinabove, and have led to the discovery that a solid titanium trichloride catalyst obtained by reacting a titanium trichloride composition with a halogen compound, an ether compound and an electron donor is unexpectedly greatly improved in catalytic activity and particularly in stereoregularity as compared to the titanium trichloride composition prior to the reaction and to those solid titanium trichloride catalysts obtained by reacting the titanium trichloride composition with the two components of the halogen compound and the ether compound, or with the two components of the halogen compound and the electron donor.

This invention, therefore, provides a process for the production of an α-olefin polymer which comprises polymerizing or copolymerizing an α-olefin in the presence of a catalyst system comprising:

(A) a solid titanium trichloride catalyst component obtained by reacting:

(1) the titanium trichloride composition represented by the general formula:

$$TiCl_3(R^1{}_nAlX_{3-n})_p(E)_q$$

wherein $R^1$ is a hydrocarbon radical containing 1 to 8 carbon atoms, X is a halogen atom, E is an ether compound, and n, p and q are each a number satisfying the equations $0 \leqq n \leqq 2$, $0 \leqq p<1$ and $0 \leqq q<1$, with a mixture of

(2) at least one halogen compound selected from the following (a), (b) and (c):

(a) a halogen represented by the general formula: $X_2$ wherein X is Cl, Br or I;

(b) an interhalogen compound represented by the general formula: $XX'_a$ wherein X and X' are each Cl, Br or I, a is 1 or 3 and X and X' are different; and

(c) a halogen-containing hydrocarbon compound containing 1 to 10 carbon atoms;

(3) an ether compound represented by the general formula:

$$R^2-O-R^3$$

wherein $R^2$ and $R^3$, which may be the same or different, are each an alkyl group containing 1 to 10 carbon atoms; and (4) an electron donor (excluding the ether compound (3) above); and

(B) an activator represented by the general formula:

$$R^4_mAlY_{3-m}$$

wherein $R^4$ is a hydrocarbon radical containing 1 to 8 carbon atoms, Y is a halogen atom or a hydrogen atom, and $\underline{m}$ is a number satisfying the equation $2 \leqq m \leqq 3$.

The aforesaid catalyst system of this invention for industrial use in the polymerization of olefins (such as propylene or butene-1) is markedly improved in catalytic activity and particularly its use permits a marked increase in the stereoregularity of olefin polymers obtained.

A feature of this invention is that the catalytic activity of the catalyst system is very high as compared to the conventional catalyst systems. The amount of the polymer formed per unit weight of the catalyst is very large, and it is possible to omit or greatly simplify the removal of the catalytic residue which is to be effected after the polymerization.

As the titanium trichloride composition represented by the aforesaid general formula:

$$TiCl_3(R^1_nAlX_{3-n})_p(E)_q$$

(wherein $R^1$ is a hydrocarbon radical containing 1 to 8 carbon atoms, X is a halogen atom, E is an ether compound,

and n, p and q are each a number satisfying the equations $0 \leqq n \leqq 2$, $0 \leqq p < 1$ and $0 \leqq q < 1$), those obtained by the following methods are preferred:

Method A

(1) A titanium trichloride composition represented by the general formula: $TiCl_3(AlCl_3)_{1/3}$ which is prepared by reducing titanium tetrachloride with metallic aluminum and ball-milling the reduction product for its activation.

(2) A titanium trichloride composition which is a reduction solid prepared by reducing titanium tetrachloride with an organoaluminum compound represented by the general formula:

$$R^1_{n'}AlX_{3-n'}$$

wherein $R^1$ is a hydrocarbon radical containing 1 to 8 carbon atoms, X is a halogen atom, and n' is a number satisfying the equation $1 \leqq n' \leqq 3$.

(3) A titanium trichloride composition which is prepared by heat-treating the reduction solid obtained in Method (2) above at a temperature of $100^\circ$ to $200^\circ C$ in the presence or absence of an inert hydrocarbon solvent.

(4) A titanium trichloride composition which is prepared by reacting the reduction solid obtained in Method (2) above with an aluminum compound represented by the general formula:

$$R^5_l AlX_{3-l}$$

wherein $R^5$ is a hydrocarbon radical containing 1 to 8 carbon atoms, X is a halogen atom, and l is a number satisfying the equation $1 \leqq l < 1.5$.

Method B

An ether compound-containing titanium trichloride compound which is prepared by reacting the titanium trichloride composition obtained in Method A above with an ether compound represented by the general formula:

$$R^6-O-R^7$$

wherein $R^6$ and $R^7$, which may be the same or different, are each an alkyl group containing 1 to 10 carbon atoms.

Method C

An ether compound-containing titanium trichloride composition which is prepared by reducing titanium tetrachloride with an organoaluminum compound represented by the general formula:

$$R^1_{n'}AlX_{3-n'}$$

wherein $R^1$ is a hydrocarbon radical containing 1 to 8 carbon atoms, X is a halogen atom, and $n'$ is a number satisfying the equation $1 \leqq n' \leqq 3$, in the presence of an ether compound represented by the general formula:

$$R^6-O-R^7$$

wherein $R^6$ and $R^7$, which may be the same or different, are each an alkyl group containing 1 to 10 carbon atoms.

Method D

A titanium trichloride composition which is prepared by reacting the titanium trichloride composition obtained in Method B above with titanium tetrachloride.

Examples of organoaluminum compounds represented by the

general formula:

$$R^1_{n'}AlX_{3-n'}$$

(wherein $R^1$ is a hydrocarbon radical containing 1 to 8 carbon atoms, X is a halogen atom and n' is a number satisfying the equation $1 \leqq n' \leqq 3$), which are used in the production of the reduction solid in Method A, include methyl aluminum dichloride, ethyl aluminum dichloride, n-propyl aluminum dichloride, ethyl aluminum sesquichloride, dimethyl aluminum chloride, diethyl aluminum chloride, di-n-propyl aluminum chloride, trimethyl aluminum, triethyl aluminum, triisobutyl aluminum, ethyl dicyclohexyl aluminum, triphenyl aluminum, diethyl aluminum hydride, diisobutyl aluminum hydride, diethyl aluminum bromide and diethyl aluminum iodide.

Of these compounds, diethyl aluminum chloride and ethyl aluminum sesquichloride provide espeically preferred results.

The reduction reaction for obtaining the reduced solid may be carried out at a temperature of $-60^{\circ}$ to $60^{\circ}C$, preferably $-30^{\circ}$ to $30^{\circ}C$. There is no particular restriction on the reaction time, but this time is usually 1 to 6 hours. In order to complete the reaction, an after-reaction is performed at $-30^{\circ}$ to $100^{\circ}C$ after the reduction reaction. The reduction solid so obtained is isolated and washed several times with an inert hydrocarbon solvent, such as pentane, hexane, heptane, octane, decane, toluene, xylene, decalin or tetralin.

The molar ratio of the organoaluminum compound to titanium tetrachloride can be varied freely depending upon the purpose of use of the catalyst. When diethyl aluminum chloride is used in an amount of 0.5 to 1.5 moles per mole of titanium tetrachloride or ethyl aluminum sesquichloride is used in an amount of 1.5 to 2.5 moles per mole of

titanium tetrachloride, preferred results are obtained.

In effecting the reduction reaction, the concentrations of the titanium tetrachloride and organoaluminum compound in the inert hydrocarbon solvent are preferably from 10% to 70% by weight.

In Method C as described above, the heat treatment of the reduction solid is performed in the presence or absence of an inert hydrocarbon solvent. The heat treatment temperature is selected in the range of from 100°C to 200°C depending upon the purpose of use, and more preferred results are usually obtained with the temperature range of from 120°C to 180°C. The treatment time is not critical, but the preferred treatment time is from 30 minutes to 6 hours.

The compound for use in reacting the reduction solid with the aluminum compound represented by the general formula:

$$R^5{}_lAlX_{3-l}$$

(wherein $R^5$ is a hydrocarbon radical containing 1 to 8 carbon atoms, X is a halogen atom, and $\underline{l}$ is a number satisfying the equation $1 \leqq l \leqq 1.5$) in Method D as described above is preferably an alkyl aluminum dihalide. An alkyl aluminum dichloride provides particularly preferred results.

Examples of the alkyl aluminum dichlorides which can be used are methyl aluminum dichloride, ethyl aluminum dichloride, n-propyl aluminum dichloride, n-butyl aluminum dichloride, n-hexyl aluminum dichloride, n-octyl aluminum dichloride, phenyl aluminum dichloride, cyclohexyl aluminum dichloride, methyl aluminum dibromide, methyl aluminum diiodide and ethyl aluminum diiodide. Of the compounds, ethyl aluminum dichloride provides particularly preferred results. These

aluminum compounds may be used alone or as a mixture of two or more thereof.

The above reaction is preferably performed in an inert hydrocarbon solvent. The reaction temperature is 0° to 200°C, preferably 30° to 150°C. While the reaction time is not critical, it is usually preferred to perform the reaction for a time of from 30 minutes to 5 hours. After the reaction is completed, the titanium trichloride composition is isolated and washed several times with an inert hydrocarbon solvent.

In Method B, each of the titanium trichloride compositions obtained in Method A is reacted with the ether compound represented by the general formula: $R^6$-O-$R^7$ to provide the titanium trichloride composition. Examples of the ether compounds which can be used are diethyl ether, di-n-propyl ether, diisopropyl ether, di-n-butyl ether, di-n-amyl ether, diisoamyl ether, dineopentyl ether, di-n-hexyl ether, di-n-octyl ether, methyl n-butyl ether, methyl isoamyl ether and ethyl isobutyl ether. Of these compounds, di-n-butyl ether and diisoamyl ether are particularly preferred.

The amount of the ether compound used is 0.0001 to 0.03 mole, preferably 0.001 to 0.02 mole, particularly preferably 0.002 to 0.01 mole, per gram of the titanium trichloride composition. The reaction temperature is from 0°C to 150°C, preferably from 10°C to 120°C. The reaction time is preferably from 5 minutes to 6 hours. The reaction is performed in an inert hydrocarbon solvent. After completion of the reaction, the solid is isolated and washed several times with an inert hydrocarbon solvent to obtain the ether compound-containing titanium trichloride composition.

In Method C, the procedure of Method B is followed except that the ether compound is present in the course of

producing the reduction solid. The amount of the ether compound used is 0.5 to 5 moles per mole of the titanium tetrachloride, with the range of 0.7 to 3 moles being especially preferred.

In Method D, the titanium trichloride composition obtained in Method B is reacted with titanium tetrachloride to provide the titanium trichloride composition. This reaction is advantageously performed in an inert hydrocarbon solvent. Suitable inert hydrocarbon solvents include pentane, hexane, heptane, octane, decane, toluene, xylene, decalin and tetralin.

A suitable concentration of titanium tetrachloride is usually from 10% by volume to 70% by volume. The treatment temperature is from room temperature to 100°C, preferably from 30°C to 80°C. The treatment time is preferably from 30 minutes to 10 hours.

As the process for the production of the titanium trichloride composition, Methods A and B are preferred with Method A being especially preferred. Among a series of Method A, Methods (2), (3) and (4) are especially preferred.

The thus obtained titanium trichloride composition is reacted with a mixture of (1) the halogen compound, (2) the ether compound represented by the general formula: $R^2$-O-$R^3$ (wherein $R^2$ and $R^3$, which may be the same or different, are each an alkyl group containing 1 to 10 carbon atoms), and (3) the electron donor (excluding the ether compound represented by the general formula: $R^2$-O-$R^3$ (wherein $R^2$ and $R^3$, which may be the same or different, are each an alkyl group containing 1 to 10 carbon atoms)).

The halogen compound is at least one compound selected from the following (a), (b) and (c):

(a) A halogen represented by the general formula: $X_2$ (wherein X is Cl, Br or I);

(b) An interhalogen compound represented by the general formula: $XX'_a$ (wherein X and X' are each Cl, Br or I, and a is 1 or 3); and
(c) A halogen-containing hydrocarbon compound containing 1 to 10 carbon atoms.

As the halogen, iodine is preferred. Suitable examples of the interhalogen compounds which can be used are bromine chloride, iodine chloride, iodine trichloride and iodine bromide, with iodine trichloride being preferred.

Suitable examples of the halogen-containing hydrocarbon compounds containing 1 to 10 carbon atoms which can be used include chloromethane, dichloromethane, chloroform, carbon tetrachloride, chloroethane, dichloroethane, trichloroethane, pentachloroethane, hexachloroethane, chloroethylene, dichloroethylene, trichloroethylene, tetrachloroethylene, chloropropane, dichloropropane, trichloropropane, tetrachloropropane, hexachloropropane, octachloropropane, chlorobutane, dichlorobutane, trichlorobutane, tetrachlorobutane, chloropentane, dichloropentane, trichloropentane, chlorohexane, dichlorohexane, dichlorooctane, dichlorocyclohexane, chlorobenzene, dichlorobenzene, chloroethylbenzene, chlorotoluene, bromomethane, tribromomethane, bromoethane, dibromoethane, tetrabromoethane, bromopropane, bromobutane, bromopentane, bromohexane, bromotoluene, chlorobromethane, ethylene chlorobromide, iodomethane, diiodomethane, iodoform, iodoethane, diiodoethane, iodopropane, diiodopropane, iodobutane, diiodobutane, iodopentane, iodohexane, iodobenzene and iodotoluene.

The amount of the halogen compound used is $10^{-5}$ to $5 \times 10^{-2}$ mole, preferably $10^{-4}$ to $10^{-2}$ mole, per gram of the titanium trichloride composition.

Of the halogen compounds (a), (b) and (c), iodine and iodine containing compounds, especially iodine, are preferred.

Suitable examples of the ether compounds represented by the general formula: $R^2$-O-$R^3$ (wherein $R^2$ and $R^3$, which may be the same or different, are each an alkyl group containing 1 to 10 carbon atoms) which can be used are diethyl ether, di-n-propyl ether, diisopropyl ether, di-n-butyl ether, di-n-amyl ether, diisoamyl ether, dineopentyl ether, di-n-hexyl ether, di-n-octyl ether, methyl n-butyl ether, methyl isoamyl ether and ethyl isobutyl ether. Among these compounds, di-n-butyl ether and diisoamyl ether are especially preferred.

The amount of the ether compound used is $10^{-4}$ to 0.03 mole, preferably $10^{-3}$ to 0.02 mole and most preferably 0.002 to 0.01 mole, per gram of the titanium trichloride composition.

The electron donor is selected from nitrogen-containing organic compounds, oxygen-containing organic compounds, silicon-containing organic compounds, sulfur-containing organic compounds and phosphorus-containing organic compounds.

Examples of nitrogen-containing organic compounds which can be used are amines, imines, amides, imides, isocyanates and nitriles, with the amines, imines and nitriles being preferred.

Amines which can be used are saturated or unsaturated amines represented by the general formula: $R^8_nNH_{3-n}$ (wherein $R^8$ is a hydrocarbon radical containing 1 to 18 carbon atoms, and n is a number of from 1 to 4), and nitrogen-containing heterocyclic compounds. Examples are triethylamine, tripropylamine, tributylamine, trihexylamine, trioctylamine, triphenylamine, diethylamine, dipropylamine, dibutylamine, dihexylamine, dioctylamine, aniline, propylaniline, butylaniline, N-methylaniline, pyridine and quinoline.

Imines which can be used are saturated or unsaturated imines represented by the general formula: $R^9=N-R^{10}$ (wherein $R^9$ and $R^{10}$ are each a hydrocarbon radical containing 1 to 18 carbon atoms), such as ethyleneimine, 1-propaneimine and N-benzylidene methylamine.

Nitriles which can be used are saturated or unsaturated nitriles represented by the general formula: $R^{11}-CN$ (wherein $R^{11}$ is a hydrocarbon radical containing 1 to 18 carbon atoms), such as acetonitrile, acrylonitrile, hexanenitrile and benzonitrile.

Of these nitrogen-containing organic compounds, tributylamine, trihexylamine, trioctylamine and triphenylamine are particularly preferred.

Examples of the oxygen-containing organic compounds which can be used are ethers, ketones, aldehydes, esters, alcohols, acetals and carboxylic acids, with the ethers, ketones and esters being preferred.

Ethers which can be used are saturated or unsaturated ethers represented by the general formula: $R^{12}-O-R^{13}$ (wherein $R^{12}$ is an aralkyl group containing up to 18 carbon atoms, a cycloalkyl group, an aryl group, and an aromatic hydrocarbon radical, and $R^{13}$ is an alkyl group containing 1 to 18 carbon atoms, an aralkyl group, a cycloalkyl group, an aryl group and an aromatic hydrocarbon radical), cyclic ethers and polyethers. Examples are anisole, ethyl phenyl ether, diphenyl ether, dibenzyl ether, phenyl benzyl ether, dicyclohexyl ether, ditolyl ether, diallyl ether, tetrahydrofuran and propylene oxide.

Ketones which can be used are saturated or unsaturated ketones represented by the general formula:

$R^{14}-\overset{O}{\overset{\|}{C}}-R^{15}$ (wherein $R^{14}$ and $R^{15}$ are each a hydrocarbon radical containing 1 to 18 carbon atoms) and cyclic ketones. Examples are acetone, methyl ether ketone, diethyl ketone, dihexyl ketone, diphenyl ketone, cyclohexanone and acetyl ketone.

Esters which can be used are saturated or unsaturated esters represented by the general formula:

$R^{16}-\overset{O}{\overset{\|}{C}}-O-R^{17}$ (wherein $R^{16}$ and $R^{17}$ are each a hydrocarbon radical containing 1 to 18 carbon atoms) and cyclic esters. Examples are methyl acetate, phenyl acetate, methyl methacrylate, methyl benzoate, ethyl benzoate, $\varepsilon$-caprolactone and ethyl chloroacetate.

Of these oxygen-containing organic compounds, anisole, diphenyl ether, methyl methacrylate and ethyl benzoate are particularly preferred.

Examples of the sulfur-containing organic compounds which can be used are thiols, sulfides, disulfides, thiophenols and thioalcohols, with the sulfides and disulfides being preferred.

Sulfides which can be used are saturated or unsaturated sulfides represented by the general formula: $R^{18}-S-R^{19}$ (wherein $R^{18}$ and $R^{19}$ are each a hydrocarbon radical containing 1 to 18 carbon atoms) and cyclic sulfides. Examples are methyl ethyl sulfide, diethyl sulfide, dipropyl sulfide, dibutyl sulfide, ethyl butyl sulfide, ethyl phenyl sulfide, diphenyl sulfide, dibenzyl sulfide and propylene sulfide.

Disulfides which can be used are saturated or unsaturated disulfides represented by the general formula: $R^{20}-S-S-R^{21}$ (wherein $R^{20}$ and $R^{21}$ are each a hydrocarbon radical containing

1 to 18 carbon atoms) and cyclic disulfides. Examples are dimethyl disulfide, diethyl disulfide, dibutyl disulfide and diallyl disulfide.

Of these sulfur-containing organic compounds, dibutyl sulfide and dibutyl disulfide are particularly preferred.

Silicon-containing organic compounds which can be used include silanes, siloxanes, silazanes and silthianes. Of these compounds, silanes containing an Si-O bond and siloxanes are preferred.

Examples of the silanes containing an Si-O bond which can be used are those represented by the general formula:

$$R^{22}_{n}Si(OR^{23})_{4-n}$$

(wherein $R^{22}$ and $R^{23}$ are each a hydrocarbon radical containing 1 to 18 carbon atoms, and _n_ is a number of from 0 to 3), such as tetramethoxy silane, tetraethoxy silane, diethoxy silane, tetrabutoxy silane, dibutoxydibutyl silane, dicyclopentoxydiethyl silane and diethoxydiphenyl silane.

Examples of the siloxanes which can be used are those represented by the general formula:

$$R^{24}_{3}Si-(OSiR^{25}_{2})_{n}-OSiR^{26}_{3}$$

(wherein $R^{24}$, $R^{25}$ and $R^{26}$ are each a hydrocarbon radical containing 1 to 18 carbon atoms, and _n_ is a number of from 1 to 3,000), such as hexamethyl disiloxane, octamethyl trisiloxane, octaethyl trisiloxane, methyl polysiloxane, methylethyl polysiloxane, diphenyl polysiloxane and methylphenyl polysiloxane.

Of these silicon-containing organic compounds, hexamethyl disiloxane and dimethyl polysiloxane are particularly preferred.

Phosphorus-containing organic compounds which can be used include phosphines, phosphinites, phosphonites, phosphites, phosphates, phosphine oxides and phosphine sulfides with the phosphines, phosphites and phosphates being preferred.

Examples of the phosphines which can be used are those represented by the general formula:

$$PR^{27}_3$$

(wherein $R^{27}$ is a hydrocarbon radical containing 1 to 18 carbon atoms), such as triethyl phosphine, tributyl phosphine, triphenyl phosphine, tribenzyl phosphone, tricyclohexyl phosphine, ethyldiphenyl phosphine and ethylbenzylphenyl phosphine.

Examples of the phosphites which can be used are those represented by the general formula:

$$P(OR^{28})_3$$

(wherein $R^{28}$ is a hydrocarbon radical containing 1 to 18 carbon atoms), such as trimethyl phosphite, tributyl phosphite, triphenyl phosphite, tributyl phosphite, triphenyl phosphite, tribenzyl phosphite, dipenylcyclohexyl phosphite and diphenylpropyl phosphite.

Examples of the phosphates which can be used are those represented by the general formula:

$$P(O)(OR^{29})_3$$

(wherein $R^{29}$ is a hydrocarbon radical containing 1 to 18 carbon atoms), such as triethyl phosphate, tributyl phosphate, triamyl phosphate, triphenyl phosphate and tricyclohexyl phosphate.

Of these phosphorus-containing organic compounds, tributyl phosphine, tributyl phosphite, triphenyl phosphite and tributyl phosphate are especially preferred.

While the amount of the electron donor used varies depending on the type thereof, it is $10^{-6}$ to 0.02 mole, preferably $5 \times 10^{-5}$ to 0.01 mole, per gram of the titanium trichloride composition.

The reaction among the titanium trichloride composition, the halogen compound, the ether compound and the electron donor is preferably performed in an inert hydrocarbon solvent. The reaction temperature is $0^{\circ}$ to $150^{\circ}C$, preferably $20^{\circ}$ to $120^{\circ}C$. While the reaction time is not critical, it is preferably from 5 minutes to 6 hours. The halogen compound, the ether compound and the electron donor may be added to the titanium trichloride composition at the same time, or after one or two of the three components are added to the titanium trichloride composition or after one or two of the three components are added to the titanium trichloride composition and reacted, the residual component or components are added and reacted. The reaction may be performed while applying pulverization processing such as vibration-milling or ball-milling. After the reaction is completed, the solid is isolated and washed several times with an inert hydrocarbon solvent to obtain the desired novel solid titanium trichloride catalyst. However, for example, a solid titanium trichloride catalyst prepared by reacting the titanium trichloride composition with the halogen compound and the ether compound, washing the resulting solid with an inert hydrocarbon and then reacting this washed solid with the electron donor is inferior in catalytic activity to the washed solid prior to the reaction with the electron donor. Therefore, it is necessary to react the titanium trichloride composition in

the copresence of the halogen compound, the ether compound and the electron donor.

Preferred examples of the organoaluminum activator, component (B), represented by the aforesaid general formula:

$$R^4_mAlY_{3-m}$$

(wherein $R^4$ is a hydrocarbon radical containing 1 to 8 carbon atoms, Y is a halogen atom or a hydrogen atom, and m is a number satisfying the equation $2 \leq m \leq 3$) which can be used in the polymerization of α-olefins in this invention include dimethyl aluminum chloride, diethyl aluminum chloride, diisobutyl aluminum chloride, diethyl aluminum bromide, diethyl aluminum iodide, trimethyl aluminum, triethyl aluminum, diethyl aluminum hydride and mixtures thereof. Of these compounds, diethyl aluminum chloride is especially preferred.

Furthermore, as stereoregularity-improving agents, known compounds such as oxygen-, nitrogen-, sulfur-, phosphorus- or halogen-containing organic compounds can be used as components of the catalyst in the polymerization of α-olefin.

Suitable examples of the stereoregularity-improving agents which can be used include diethyl ether, ethyl vinyl ether, methyl acrylate, methyl methacrylate, ethyl benzoate, ethyl p-anisate, methyl n-butyrate, methyl p-methoxybenzoate, triethylamine, tri-n-butylamine, γ-butyrolactone, ε-caprolactone, di-n-butylsulfide, thiophenol, tri-n-butyl phosphine, triphenyl phosphine, tri-n-butyl phosphite, triphenyl phosphite, tri-n-butyl phosphate, hexamethyl phoramide and benzoyl chloride.

While the amounts of catalytic components: (A) solid titanium trichloride catalyst; (B) organoaluminum compound; and (C) stereoregularity-improving agent being added are not specifically restricted, it is suitable

that the molar ratio of (C) to (A) is 0.1 to 10, preferably 0.5 to 5, the concentration of (B) in the polymerization vessel is 1 to 100 mmoles/litre, and that the molar ratio of (B) to (A) is 1 or more.

The order in which the catalytic components are added to the polymerization vessel is not critical, but when Component (A) comes in direct contact with Component (C) of a high concentration in the absence of Component (B), a reduction in catalytic activity may occur. In this case, therefore, care must be taken in the order of adding the catalytic components.

The polymerization of an olefin can be carried out over the temperature range of $-30^{o}$ to $200^{o}C$. However, at lower temperatures than $0^{o}C$, the rate of polymerization decreases whereas at higher temperatures than $100^{o}C$, no polymers of high stereoregularity can be obtained. Usually, therefore, the reaction is performed in the range of $0^{o}$ to $100^{o}C$.

While the polymerization pressure is not critical, a pressure of 3 to 100 atmospheres is desirable from the industrial and economic standpoints.

The polymerization can be performed either in a continuous or batchwise manner.

α-Olefins which can be used in this invention are those containing 2 to 10 carbon atoms, such as ethylene, propylene, butene-1, pentene-1, 4-methylpentene-1 or hexene-1.

The olefin polymerization can be either homopolymerization or copolymerization.

In copolymerization, two or more α-olefins are mixed and contacted with the catalyst system to form copolymers. In order to obtain highly stereoregular copolymers, the mixing

ratio of two α-olefins is desirably such that the proportion of one of the olefins is not more than 10 mole%.

Heteroblock copolymerization in two or more stages can also be easily performed. Suitable methods of polymerization include slurry polymerization in which an inert hydrocarbon solvent such as butane, pentane, hexane, heptane or octane is used, polymerization in the liquified monomer using no solvent, and gas phase polymerization in a gaseous monomer.

The following Examples and Comparative Examples are given to illustrate this invention in greater detail.

Example 1

Method 1: Preparation of Solid Titanium Trichloride Catalyst

A 200 ml flask equipped with a stirrer was purged with argon and then charged with 10.0 g of $TiCl_3AA$ (TAC-131 produced by Toho Titanium Co., Ltd.), 80 ml of toluene, 1.15 g of iodine, 11.0 ml of di-n-butyl ether and 1.0 ml of tri-n-butyl phosphate. They were reacted at 100°C for 1 hour. After the reaction was completed, the reaction mixture was allowed to stand at room temperature to separate a solid. This solid was washed three times with 70 ml of toluene and two times with 70 ml of n-heptane to obtain a solid titanium trichloride catalyst.

Method 2: Polymerization of Propylene

A 5-litre autoclave equipped with a magnetic induction stirrer was purged with argon and then charged with 1.5 g of diethyl aluminum chloride, 50 mg of the solid titanium trichloride catalyst obtained in Method 1 above and 100 ml of n-heptane. Hydrogen was then introduced into the autoclave in an amount corresponding to a partial pressure of 0.53 $Kg/cm^2$. Thereafter, 1.4 Kg of propylene was introduced under pressure into the autoclave.

The temperature of the autoclave was maintained at 65°C for 2 hours while stirring. An excess of propylene was discharged, and 2 litres of methanol was then added to decompose the catalyst. The polymer so formed was filtered off and vacuum-dried at 60°C to obtain 205 g of a polymer.

The rate of polymerization $R_p$ expressed by the amount of the polymer per gram of $TiCl_3$ solid catalyst per hour (g polymer/g $TiCl_3$.hr) was 2050.

The boiling heptane-insoluble portion (hereinafter referred to as II) of the polymer obtained was measured by effecting extraction using boiling heptane for 8 hours in a modified Soxhlet extractor and found to be 97.8 %.

Comparative Example 1

Using the $TiCl_3$AA of Example 1 alone as the catalyst, propylene was polymerized in the same manner as described in Method 2 of Example 1.

$R_p$=830;   II=91.4 %.

Comparative Example 2

A solid titanium trichloride catalyst was prepared in the same manner as described in Method 1 of Example 1 except that tri-n-butyl phosphate was not added. Using the solid titanium trichloride catalyst so formed, propylene was polymerized in the same manner as described in Method 2 of Example 1.

$R_p$=1870;   II=97.2 %.

Example 2

Method 1: Preparation of Titanium Trichloride Composition (A)

A 500 ml four necked flask equipped with a stirrer and a dropping funnel was purged with argon and then charged with 200 ml of *n*-heptane and 50 ml of titanium tetrachloride. The solution was maintained at -5°C. Then, 150 ml of *n*-heptane and 58 ml of diethyl aluminum chloride were introduced into the dropping funnel and dropwise added to the titanium tetrachloride solution at such a rate that the temperature of the flask could be maintained at -3°C or less. After the dropwise addition was completed, the resulting mixture was stirred for 30 minutes. At the end of the time, the temperature was raised to 50°C, and the mixture was stirred for an additional 1 hour. The reaction mixture was then allowed to stand at room temperature to separate a solid. The solid so obtained was washed five times with 100 ml of *n*-heptane to obtain Titanium Trichloride Composition (A).

Method 2: Preparation of Solid Titanium Trichloride Catalyst

A 100 ml flask equipped with a stirrer was purged with argon. Then, 5 g of Titanium Trichloride Composition (A) obtained in Method 1 above, 40 ml of toluene, 0.56 g of iodine, 5.5 ml of di-*n*-butyl ether and 0.2 ml of tri-*n*-butyl phosphate were introduced into the flask in that order at 20°C. The resulting mixture was heated to 100°C and reacted at that temperature for 1 hour. After the reaction, the reaction mixture was allowed to stand at room temperature to separate a solid. The solid so formed was washed three times with 50 ml of toluene and two times with 50 ml of *n*-heptane to obtain a solid titanium trichloride catalyst.

Method 3: Polymerization of Propylene

Using the solid titanium trichloride catalyst obtained in Method 2 above, propylene was polymerized in the same manner as described in Method 2 of Example 1.

The results are shown in Table 1.

Examples 3 to 5

Solid titanium trichloride catalysts were prepared in the same manner as described in Method 2 of Example 2 except that the amounts of the iodine, di-*n*-butyl ether and tri-*n*-butyl phosphate used, and the reaction temperature were changed. Using each of the solid titanium trichloride catalysts, propylene was polymerized in the same manner as described in Method 2 of Example 1.

The results are shown in Table 1.

Table 1

| Example | Conditions for Preparation of Solid Titanium Trichloride Catalyst | | | | Results | |
|---|---|---|---|---|---|---|
| | Iodine (g) | Di-n-butyl Ether (ml) | Tri-n-butyl Phosphate (ml) | Reaction Temperature (°C) | $R_p$ | II (%) |
| 2 | 0.56 | 5.5 | 0.2 | 100 | 2540 | 98.1 |
| 3 | 0.82 | 5.5 | 0.4 | 90 | 2400 | 97.9 |
| 4 | 0.56 | 3.8 | 0.4 | 90 | 2490 | 98.0 |
| 5 | 0.56 | 3.8 | 0.9 | 80 | 2440 | 97.9 |

Comparative Example 3

Using Titanium Trichloride Composition (A) obtained in Method 1 of Example 2, propylene was polymerized in the same manner as described in Method 2 of Example 1.

$R_p$=650; II=77.1 %.

Comparative Example 4

A solid titanium trichloride catalyst was prepared in the same manner as described in Method 2 of Example 2 except that tri-n-butyl phosphate was not added. Using the solid titanium trichloride catalyst so obtained, propylene was polymerized in the same manner as described in Method 2 of Example 1.

$R_p$=2320; II=97.1 %.

Example 6

Method 1: Preparation of Solid Titanium Trichloride Composition (B)

A 200 ml flask equipped with a stirrer was purged with argon and then charged with 20 g of Titanium Trichloride Composition (A) obtained in Method 1 of Example 1 and 100 ml of n-decane. The mixture was thus heat-treated at 130°C for 3 hours. The resulting mixture was allowed to stand at room temperature to separate a solid. The solid so formed was washed five times with 50 ml of n-heptane to obtain Titanium Trichloride Composition (B).

Method 2: Preparation of Solid Titanium Trichloride Catalyst

Using Titanium Trichloride Composition (B) obtained in

Method 1 above, a solid titanium trichloride catalyst was prepared in the same manner as described in Method 2 of Example 2.

Method 3: Polymerization of Propylene

Using the solid titanium trichloride obtained in Method 2 above, propylene was polymerized in the same manner as described in Method 2 of Example 1.

Examples 7 and 8

Solid titanium trichloride catalysts were prepared in the same manner as described in Method 2 of Example 6 except that the temperature at which the iodine, di-n-butyl ether and tri-n-butyl phosphate were introduced into the autoclave was changed. Using each of the solid titanium trichloride catalysts obtained above, propylene was polymerized in the same manner as described in Method 2 of Example 1.

The results are shown in Table 2.

Table 2

| Example | Temperature at which iodine, di-n-butyl ether and tri-n-butyl phosphate were introduced (°C) | Results $R_p$ | Results II (%) |
|---|---|---|---|
| 6 | 20 | 3450 | 98.3 |
| 7 | 50 | 3500 | 98.4 |
| 8 | 70 | 3410 | 98.1 |

Examples 9 and 10

Solid titanium trichloride catalysts were prepared in the

same manner as described in Method 2 of Example 6 except that the order in which the iodine, di-n-butyl ether and tri-n-butyl phosphate were introduced was changed. Using each of the solid titanium trichloride catalysts, propylene was polymerized in the same manner as described in Method 2 of Example 1.

The results are shown in Table 3.

Table 3

| Example | Order in which iodine, di-n-butyl ether and tri-n-butyl phosphate are introduced | Results $R_p$ | Results II (%) |
|---|---|---|---|
| 9 | di-n-butyl ether ⟶ tri-n-butyl phosphate ⟶ iodine | 3480 | 98.2 |
| 10 | ionine ⟶ tri-n-butyl phosphate ⟶ di-n-butyl ether | 3410 | 98.2 |

Examples 11 to 15

Solid titanium trichloride catalysts were prepared in the same manner as described in Method 2 of Example 6 except that the type of the electron donor and its amount were changed as shown in Table 4. Using each of the solid titanium trichloride catalysts, propylene was polymerized in the same manner as described in Method 2 of Example 1.

The results are shown in Table 4.

Table 4

| Example | Electron Donor | Amount Used (ml) | $R_p$ | II (%) |
|---|---|---|---|---|
| 11 | tri-n-butylamine | 0.3 | 3300 | 98.3 |
| 12 | anisole | 1.1 | 3470 | 98.4 |
| 13 | di-n-butyl disulfide | 1.5 | 3420 | 98.0 |
| 14 | dimethyl polysiloxane | 0.8 | 3490 | 98.1 |
| 15 | tri-n-butyl phosphine | 0.2 | 3390 | 98.3 |

Comparative Example 5

Using Titanium Trichloride Composition (B) obtained in Method 1 of Example 6, propylene was polymerized in the same manner as described in Method 2 of Example 1

$R_p$=1240; II=90.3 %.

Comparative Example 6

A solid titanium trichloride catalyst was prepared in the same manner as described in Method 2 of Example 6 except that tri-n-butyl phosphate was not used. Using the solid titanium trichloride catalyst thus obtained, propylene was polymerized in the same manner as in Method 2 of Example 1.

$R_p$=3170; II=97.7 %.

Example 16

Method 1: Preparation of Titanium Trichloride Composition (C)

A 300 ml flask equipped with a stirrer was purged with argon and then charged with 30 g of Titanium Trichloride

Composition (B) obtained in Method 1 of Example 6, 180 ml of toluene and 33 ml of di-n-butyl ether. The mixture was reacted at 90°C for 1 hour. The reaction mixture was allowed to stand at room temperature to separate a solid. The solid so formed was washed three times with 100 ml of toluene and two times with 100 ml of n-heptane to obtain Titanium Trichloride Composition (C).

Method 2: Preparation of Solid Titanium Trichloride Catalyst

Using Titanium Trichloride Composition (C) obtained in Method 2 above, a solid titanium trichloride catalyst was prepared in the same manner as described in Method 2 of Example 2.

Method 3: Polymerization of Propylene

Using the solid titanium trichloride catalyst obtained in Method 2 above, propylene was polymerized in the same manner as described in Method 2 of Example 1.

$$R_p=3640; \quad II=98.4\ \%.$$

Comparative Example 7

Using Titanium Trichloride Composition (C) obtained in Method 1 of Example 16, propylene was polymerized in the same manner as described in Method 2 of Example 1.

$$R_p=1940; \quad II= 92.6\ \%.$$

Comparative Example 8

A solid titanium trichloride catalyst was prepared in the same manner as described in Method 2 of Example 16 except that tri-n-butyl phosphate was not used. Using the

solid titanium trichloride catalyst obtained above, propylene was polymerized in the same manner as described in Method 2 of Example 1.

$R_p$=3390; II=97.9 %.

Example 17

Method 1: Preparation of Titanium Trichloride Composition (D)

A 300 ml flask equipped with a stirrer was purged with argon and then charged with 30 g of Titanium Trichloride Composition (A) obtained in Method 1 of Example 2, 120 ml of n-heptane and 60 ml of ethyl aluminum dichloride. The mixture was reacted at 90°C for 2 hours. After the reaction, the reaction mixture was allowed to stand at room temperature to separate a solid. The solid so formed was washed five times with 100 ml of n-heptane to obtain Titanium Trichloride Composition (D).

Method 2: Preparation of Solid Titanium Trichloride Catalyst

A 100 ml flask equipped with a stirrer was purged with argon and then charged with 5 g of Titanium Trichloride Composition (D) obtained in Method 1 above and 40 ml of toluene at 20°C. The mixture was further heated to 50°C and then 0.56 g of iodine, 5.5 ml of di-n-butyl ether and 0.5 ml of di-n-butyl sulfide were introduced thereinto in that order. Thereafter, the mixture was raised to 100°C and reacted at that temperature for 1 hour. After the reaction was completed, the reaction mixture was allowed to stand at room temperature to separate a solid. The solid so formed was washed three times with 50 ml of toluene and two times with 50 ml of n-heptane to obtain a solid titanium trichloride catalyst.

Method 3: Polymerization of Propylene

Using the solid titanium trichloride catalyst obtained in Method 2 above, propylene was polymerized in the same manner as described in Method 2 of Example 1 except that 0.1 ml of methyl methacrylate was added as a stereoregularity-improving agent.

$R_p$=3370; II=98.6 %.

Comparative Example 9

Using Titanium Trichloride Composition (D) obtained in Method 1 of Example 17, propylene was polymerized in the same manner as described in Method 3 of Example 17.

$R_p$=1230; II=93.0 %.

Comparative Example 10

A solid titanium trichloride catalyst was prepared in the same manner as described in Method 2 of Example 17 except that di-n-butyl sulfide was not used. Using the solid titanium trichloride catalyst obtained above, propylene was polymerized in the same manner as described in Method 3 of Example 17.

$R_p$=3180; II-98.0%.

Example 18

Method 1: Preparation of Solid Titanium Trichloride Catalyst

Using Titanium Trichloride Composition (D) obtained in Method 1 of Example 17, Titanium Trichloride Composition (E) was obtained in the same manner as in Method 1 of

Example 16. Subsequently, in the same manner as described in Method 2 of Example 17, a solid titanium trichloride catalyst was prepared.

Method 2: Polymerization of Propylene

Using the solid titanium trichloride catalyst obtained in Method 1 above, propylene was polymerized in the same manner as described in Method 2 of Example 1 except that 0.2 ml of triphenyl phosphite was used as a stereoregularity-improving agent.

$R_p$= 3370; II=98.6 %.

Comparative Example 11

Using Titanium Trichloride Composition (E) obtained in Method 1 of Example 18, propylene was polymerized in the same manner as described in Method 2 of Example 18.

$R_p$= 1300; II=93.2 %.

Comparative Example 12

A solid titanium trichloride catalyst was prepared in the same manner as described in Method 1 of Example 18 except that di-*n*-butyl sulfide was not added. Using the solid titanium trichloride catalyst so obtained, propylene was polymerized in the same manner as described in Method 2 of Example 18.

$R_p$= 3200; II=98.1 %.

Example 19

Method 1: Preparation of Titanium Trichloride Composition (F)

After purging a 500 ml four necked flask equipped with a stirrer and dropping funnel with argon, 100 ml of n-heptane and 25 ml of titanium tetrachloride were introduced thereinto, and the resulting solution was maintained at -5°C. A solution consisting of 75 ml of n-heptane and 58 ml of ethyl aluminum sesquichloride was then dropwise added thereto from the dropping funnel at such a rate that the temperature in the flask was maintained at -3°C or less. After the dropwise addition was completed, the resulting mixture was stirred for 30 minutes and then heated to 75°C at which it was stirred for an additional 2 hours. Thereafter, the reaction mixture was allowed to stand at room temperature to separate a solid. The solid so formed was washed five times with 100 ml of n-heptane to obtain Titanium Trichloride Composition (F).

Method 2: Preparation of Solid Titanium Trichloride Catalyst

After purging a 100 ml flask equipped with a stirrer with argon, 5 g of Titanium Trichloride Composition (F) obtained in Method 1 above, 40 ml of toluene, 0.56 g of iodine, 5.5 ml of di-n-butyl ether and 0.5 ml of tri-n-octylamine were introduced thereinto at 50°C in that order. Thereafter, the temperature was raised to 100°C at which the mixture was reacted for 1 hour. After the reaction was completed, the reaction mixture was allowed to stand at room temperature to separate a solid. The solid so formed was washed three times with 50 ml of toluene and two times with 50 ml of n-heptane to obtain a solid titanium trichloride catalyst.

Method 3: Polymerization of Propylene

Using the solid titanium trichloride catalyst obtained in Method 2 above, propylene was polymerized in the same manner as described in Method 2 of Example 1.

$R_p$=3570; II=98.2 %.

Examples 20 to 23

Solid titanium trichloride catalysts were prepared in the same manner as in Method 2 of Example 19 except that other electron donors were used in place of tri-n-octylamine and their amounts were changed. Using each of the solid titanium trichloride catalysts, propylene was polymerized in the same manner as described in Method 2 of Example 1.

The results are shown in Table 4.

Table 4

| Example | Electron Donor | Amount Used | $R_p$ | II |
|---|---|---|---|---|
| | | (ml) | | (%) |
| 20 | diphenyl ether | 0.3 | 3590 | 98.1 |
| 21 | methyl methacrylate | 0.2 | 3490 | 98.2 |
| 22 | hexamethyl disiloxane | 0.7 | 3570 | 98.1 |
| 23 | tri-n-butyl phosphite | 0.8 | 3570 | 98.2 |

Examples 24 to 28

Solid titanium trichloride catalysts were prepared in the same manner as described in Method 2 of Example 19 except that other halogen compounds were used in place of iodine and their amounts were changed. Using each of the solid titanium trichloride catalysts so obtained, propylene was polymerized in the same manner as described in Method 2 of Example.

The results are shown in Table 5.

Table 5

| Example | Halogen compound | Amount Used (g) | $R_p$ | II (%) |
|---|---|---|---|---|
| 24 | 1-iodobutane | 0.58 | 3410 | 98.0 |
| 25 | iodoethane | 0.48 | 3250 | 97.6 |
| 26 | 1-iodopropane | 0.50 | 3310 | 97.8 |
| 27 | iodoform | 1.10 | 3320 | 97.8 |
| 28 | iodine trichloride | 0.70 | 3200 | 97.5 |

Comparative Example 13

Using Titanium Trichloride Composition (F) obtained in Method 1 of Example 19, propylene was polymerized in the same manner as described in Method 2 of Example 1.

$$R_p=1200; \quad II=90.8\ \%.$$

Comparative Examples 14 to 19

Solid titanium trichloride catalysts were prepared in the same manner as described in Method 2 of Example 19 except that one or two of iodine, di-n-butyl ether and tri-n-octylamine were used. Using each of the solid titanium trichloride catalysts so obtained, propylene was polymerized in the same manner as described in Method 2 of Example 1.

The results are shown in Table 5.

Table 5

| Comparative Example | Amount of Iodine Used (g) | Amount of Di-n-butyl Ether Used (ml) | Amount of Tri-n-octylamine Used (ml) | $R_p$ | II (%) |
|---|---|---|---|---|---|
| 14 | 0.56 | 5.5 | - | 3120 | 97.3 |
| 15 | 0.56 | - | 0.5 | 1230 | 95.0 |
| 16 | - | 5.5 | 0.5 | 1780 | 93.5 |
| 17 | 0.56 | - | - | 1190 | 94.8 |
| 18 | - | 5.5 | - | 1750 | 93.0 |
| 19 | - | - | 0.5 | 1190 | 91.5 |

Example 29

Method 1: Preparation of Titanium Trichloride Composition (G)

After purging a 200 ml four necked flask equipped with a stirrer and a dropping funnel with argon, 5 ml of titanium tetrachloride, 50 ml of toluene and 8.0 ml of di-*n*-butyl ether were introduced thereinto, and the resulting solution was maintained at 0°C. Then, 3.0 ml of diethyl aluminum chloride and 8 ml of toluene were charged into the dropping funnel and dropwise added to the solution over a period of 30 minutes. After the dropwise addition was completed, the solution was stirred at 25°C for 2 hours and heated to 80°C at which it was stirred for an additional 2 hours. Thereafter, the reaction was allowed to stand at room temperature to separate a solid. The solid so formed was washed three times with 50 ml of toluene and two times with 50 ml of *n*-heptane to obtain Titanium Trichloride Composition (G).

Method 2: Preparation of Solid Titanium Trichloride Catalyst

Using Titanium Trichloride Composition (G) obtained in Method 1 above, a solid titanium trichloride catalyst was prepared in the same manner as described in Method 2 of Example 19.

Method 3: Polymerization of Propylene

Using the solid titanium trichloride catalyst obtained in Method 2 above, propylene was polymerized in the same manner as described in Method 2 of Example 1.

$R_p$=3250; II=97.6 %.

Comparative Example 20

Using Titanium Trichloride Composition (G) obtained in Method 1 of Example 29, propylene was polymerized in the same manner as described in Method 2 of Example 1.

$R_p$= 2739; II=95.1 %.

Comparative Example 21

A solid titanium trichloride catalyst was prepared in the same manner as described in Method 2 of Example 29 except that tri-n-octylamine was not used. Using the solid titanium trichloride catalyst so obtained, propylene was polymerized in the same manner as described in Method 2 of Example 1.

Example 30

Method 1: Preparation of Ether-treated Solid

After purging a 300 ml flask equipped with a stirrer with argon, 30 g of Titanium Trichloride Composition (A) obtained in Method 1 of Example 2, 180 ml of n-heptane and 39 ml of di-isoamyl ether were charged thereinto and reacted at 40°C for 1 hour. The reaction mixture was then allowed to stand at room temperature to separate a solid. The solid so formed was washed five times with 100 ml of n-heptane to obtain an ether-treated solid.

Method 2: Preparation of Titanium Trichloride Composition (H)

After purging at 100 ml flask equipped with a stirrer with argon, 10 g of the ether-treated solid obtained in Method 1 above, 24 ml of n-heptane and 16 ml of titanium tetrachloride were charged thereinto and reacted at 65°C for 2 hours. After the reaction was completed, the reaction mixture was

allowed to stand at room temperature to separate a solid. The solid so formed was washed five times with 70 ml of n-heptane to obtain Titanium Trichloride Composition (H).

Method 3: Preparation of Solid Titanium Trichloride Catalyst

Using Titanium Trichloride Composition (H) obtained in Method 2 above, a solid titanium trichloride catalyst was prepared in the same manner as described in Method 2 of Example 19.

Method 4: Polymerization of Propylene

Using the solid titanium trichloride catalyst obtained in Method 3 above, propylene was polymerized in the same manner as described in Method 2 of Example 1.

$R_p$=3490; II=98.4 %.

Comparative Example 22

Using Titanium Trichloride Composition (H) obtained in Method 2 of Example 30, propylene was polymerized in the same manner as described in Method 2 of Example 1.

$R_p$=3140; II=97.3 %.

Comparative Example 23

A solid titanium trichloride catalyst was prepared in the same manner as described in Method 3 of Example 30 except that tri-n-octylamine was not used. Using the solid titanium trichloride catalyst so obtained, propylene was polymerized in the same manner as described in Method 2 of Example 1.

$R_p$=3250; II=97.9 %.

Example 31

Using the solid titanium trichloride catalyst obtained in Method 2 of Example 19, ethylene and propylene were copolymerized in the same manner as described in Method 2 of Example 1 except that the polymerization was performed at 60$^{o}$C for 2 hours while introducing ethylene under pressure so as to maintain the concentration of ethylene in the gas phase at a constant level during the polymerization. During the polymerization, the concentration of ethylene in the gas phase in the polymerization vessel was 0.9 to 1.4 mole %, and the average concentration of ethylene in the gas phase was 1.1 mole %.

$R_p$=3530; II=96.1 %.

Infrared spectrographic analysis showed that the ethylene content of the polymer obtained was 2.4 % by weight.

Example 32

A solid titanium trichloride catalyst was prepared in the same manner as in Method 2 of Example 19 except that the reaction was carried out without using the tri-n-octylamine for 1 hour at 100$^{o}$C and then, the reaction was carried out by adding tri-n-octylamine for an additional 30 minutes at 100$^{o}$C. Using the solid titanium trichloride catalyst so obtained, propylene was polymerized in the same manner as in Method 2 of Example 1.

$R_p$=3450; II=97.5 %.

Comparative Example 24

After purging a 100 ml flask equipped with a stirrer with argon, 5 g of Titanium Trichloride Composition (F) obtained in Method 1 of Example 19, 40 ml of toluene, 0.56 g of

iodine and 5.5 ml of di-n-butyl ether were introduced thereinto at 50°C in that order. Thereafter, the temperature was elevated to 100°C at which the mixture was reacted for 1 hour. After the reaction was completed, the reaction mixture was allowed to stand at room temperature to separate a solid. The solid so formed was washed three times with 50 ml of toluene and two times with 50 ml of n-heptane. The washed solid was suspended in 40 ml of toluene, and tri-n-octylamine was then added thereto at 50°C. Thereafter, the solid was reacted at 100°C for 30 minutes to obtain a solid titanium trichloride catalyst. Using the solid catalyst so obtained, propylene was polymerized in the same manner as in Method 2 of Example 1.

$R_p$=2860; II=97.6 %.

Comparative Example 25

Propylene was polymerized in the same manner as in Method 2 of Example 1 except for using the solid titanium trichloride catalyst obtained in Comparative Example 14 and introducing 0.005 ml of tri-n-octylamine together with 1.5 g of diethyl aluminum chloride into the autoclave.

$R_p$=3150; II=97.1 %.

Claims:

1. A process of preparing a solid titanium trichloride catalyst component, comprising reacting together:

(1) a titanium trichloride composition represented by the general formula:

$$TiCl_3(R^1{}_nAlX_{3-n})_p(E)_q$$

wherein $R^1$ is a hydrocarbon radical containing 1 to 8 carbon atoms, X is a halogen atom, E is an ether compound, and m, p and q are each a number satisfying the equations $0 \leqq n \leqq 2$, $0 \leqq p < 1$,

(2) in an amount of $10^{-5}$ to 0.05 mole per gram of composition (1), at least one halogen compound selected from the following (a), (b) and (c):

(a) a halogen represented by the general formula: $X_2$ wherein X is Cl, Br or I;

(b) an interhalogen compound represented by the general formula: $XX'_a$ wherein X and X', which are different, are each Cl, Br or I, and a is 1 or 3; and

(c) a halogenated hydrocarbon compound containing 1 to 10 carbon atoms; and

(3) in an amount of $10^{-4}$ to 0.03 mole per gram of composition (1), an ether compound represented by the general formula:

$$R^2\text{-}O\text{-}R^3$$

wherein $R^2$ and $R^3$, which may be the same or different, are each an alkyl group containing 1 to 10 carbon atoms; characterised in that the reaction mixture also includes

(4) in an amount of $10^{-6}$ to 0.02 mole per gram of composition (1), an electron donor (other than the ether compound (3) above).

2. A process as claimed in Claim 1, wherein the electron donor is an organic compound containing a nitrogen, oxygen, silicon, sulfur and/or phosphorus atom.

3. A process as claimed in Claim 2, wherein the nitrogen-containing organic compound is an amine, an imine, an amide, an imide, an isocyanate or a nitrile.

4. A process as claimed in Claim 2, wherein the oxygen-containing organic compound is an ether, a ketone, an aldehyde, an ester, an alcohol, an acetal or a carboxylic acid.

5. A process as claimed in Claim 2, wherein the sulfur-containing organic compound is a thiol, a sulfide, a disulfide, a thiophenol or a tioalcohol.

6. A process as claimed in Claim 2, wherein the silicon-containing organic compound is a silane, a siloxane, a silazane or a silthiane.

7. A process as claimed in Claim 2, wherein the phosphorus-containing organic compound is a phosphine, a phosphinite, a phosphonite, a phosphite, a phosphate, a phosphine oxide or a phosphine sulfide.

8. A process as claimed in Claim 2, wherein the electron donor is tributylamine, trihexylamine, trioctylamine, triphenylamine, anisole, diphenyl ether, methyl methacrylate, ethyl benzoate, dibutyl sulfide, dibutyl disulfide, hexamethyl disiloxane or dimethyl polysiloxane.

9. A process as claimed in any preceding claim, wherein the amount of the electron donor is $5 \times 10^{-5}$ to 0.01 mole per gram of the titanium trichloride composition.

10. A process as claimed in any preceding claim, wherein the amount of the halogen compound is $10^{-4}$ to 5 x 0.01 mole per gram of the titanium trichloride composition.

11. A process as claimed in any preceding claim, wherein the amount of the ether compound is $10^{-3}$ to 0.02 mole per gram of the titanium trichloride composition.

12. A process as claimed in any preceding claim, wherein the reacting of the titanium trichloride composition with the mixture of the halogen compound (1), the ether compound (2) a .d the electron donor (3) is carried out at a temperature of $0^{o}$ to $150^{o}C$ for a period of 5 minutes to 6 hours.

13. A catalyst system comprising a catalyst component as prepared by any preceding claim and an activator represented by the following general formula:

$$R^{4}_{m}AlY_{3-m}$$

wherein $R^4$ is a hydrocarbon radical containing 1 to 8 carbon atoms, Y is a halogen atom or a hydrogen atom, and m is a number satisfying the equation $2 \leqq m \leqq 3$.

14. A method of preparing highly crystalline olefin polymer, which comprises polymerizing at least one olefin containing 2 to 10 carbon atoms in the presence of a catalyst system as claimed in Claim 13.

0034935

European Patent Office

# EUROPEAN SEARCH REPORT

Application number

EP 81 30 0733

| Category | DOCUMENTS CONSIDERED TO BE RELEVANT<br>Citation of document with indication, where appropriate, of relevant passages | Relevant to claim | CLASSIFICATION OF THE APPLICATION (Int. Cl.3) |
|---|---|---|---|
| D | GB - A - 1 559 447 (SUMITOMO)<br>* Claims 1-31 * | 1,10,<br>11,13,<br>14 | C 08 F 10/00<br>4/64 |
| | -- | | |
| | GB - A - 1 152 192 (SOC. ITALIANA RESINE)<br>* Claims 1,2 * | 1 | |
| | -- | | |
| D | GB - A - 1 391 067 (SOLVAY)<br>* Claims 1,20,21,24,25,28; page 3, lines 44-64 * | 1,2-5,<br>7,8 | TECHNICAL FIELDS SEARCHED (Int Cl.3) |
| | -- | | C 08 F 10/00-<br>10/14<br>110/00-<br>110/14<br>210/00<br>210/18<br>4/64<br>4/62 |
| | FR - A - 2 334 693 (EXXON)<br>* Claim 1; page 4, lines 7-14 *<br>& US - A - 4 085 064 | 1 | |
| | -- | | |
| | GB - A - 809 717 (BASF)<br>* Claims 1-21; page 1, lines 29-49; page 2, lines 18-66 * | 1-4,8,<br>9 | |
| | -- | | |
| | GB - A - 851 113 (PETROCHEMICALS)<br>* Claims 1,11-21, 24-26; page 2, lines 28-42; page 3, lines 12-42 * | 1-4,<br>8,9 | CATEGORY OF CITED DOCUMENTS<br>X: particularly relevant<br>A: technological background<br>O: non-written disclosure<br>P: intermediate document<br>T: theory or principle underlying the invention<br>E: conflicting application<br>D: document cited in the application<br>L: citation for other reasons |
| | -- | | |
| | GB - A - 1 061 736 (EASTMAN KODAK)<br>* Claims 1-3; page 2, line 25 - page 3, line 10 * | 1,2,3,<br>7 | |
| | -- | | |
| | FR - A - 2 324 652 (MONTEDISON)<br>./. | 1,2,3,<br>4,6 | &: member of the same patent family,<br>corresponding document |

☑ The present search report has been drawn up for all claims

| Place of search | Date of completion of the search | Examiner |
|---|---|---|
| The Hague | 27-05-1981 | WEBER |

EPO Form 1503.1 06.78

European Patent Office

# EUROPEAN SEARCH REPORT

Application number
EP 81 30 0733
-2-

| DOCUMENTS CONSIDERED TO BE RELEVANT | | | CLASSIFICATION OF THE APPLICATION (Int. Cl.3) |
|---|---|---|---|
| Category | Citation of document with indication, where appropriate, of relevant passages | Relevant to claim | |
| | * Page 7, lines 8-20 *<br>& US - A - 4 115 319<br>---- | | |
| | | | TECHNICAL FIELDS SEARCHED (Int. Cl.3) |